Europäisches Patentamt

European Patent Office

Office européen des brevets

(11) Veröffentlichungsnummer: **0 138 063**
**A2**

## (12) EUROPÄISCHE PATENTANMELDUNG

(21) Anmeldenummer: **84110891.3**

(22) Anmeldetag: **12.09.84**

(51) Int. Cl.⁴: **G 10 L 5/06**

(30) Priorität: **29.09.83 DE 3335356**

(43) Veröffentlichungstag der Anmeldung: **24.04.85**
**Patentblatt 85/17**

(84) Benannte Vertragsstaaten: **AT DE FR GB IT**

(71) Anmelder: **Siemens Aktiengesellschaft, Berlin und München Wittelsbacherplatz 2, D-8000 München 2 (DE)**

(72) Erfinder: **Höge, Harald, Dr., Hauptstrasse 19, D-8035 Unterbrunn (DE)**

(54) Verfahren zur Parameterextraktion in der automatischen Spracherkennung und in der Sprachcodierung.

(57) Verfahren zur Parameterextraktion in der automatischen Spracherkennung und in der Sprachcodierung, bei dem aus einem zu bewertenden Sprachsignal Parametersätze, wie Energiewerte von Bandpässen, Reflexionskoeffizienten und/oder Autokorrelationskoeffizienten, berechnet werden, und wobei mit den gewonnenen Parametern eine Vektorquantisierung durchgeführt wird, für die das Sprachsignal in Sprachsignalabschnitte unterteilt wird, wobei die Sprachsignalabschnitte jeweils einem bestimmten Parametersatz erster Art, der aus mindestens einer vorgegebenen Menge von L verschiedenen Parametersätzen ausgewählt ist, zugeordnet werden.

SIEMENS AKTIENGESELLSCHAFT
Berlin und München

Unser Zeichen
VPA 83 P 1774 E

0138063

- 1 -

Verfahren zur Parameterextraktion in der automatischen
Spracherkennung und in der Sprachcodierung.

Die vorliegende Erfindung betrifft ein Verfahren zur Parameterextraktion in der automatischen Spracherkennung und
in der Sprachcodierung, bei dem aus einem zu bewertenden
Sprachsignal Parametersätze wie Energiewerte von Bandpässen, Reflexionskoeffizienten und/oder Autokorrelationskoeffizienten berechnet werden, die gewonnenen Parameter mit
entsprechenden Parametern gespeicherter Sprachmuster verglichen werden und aufgrund einer gemessenen Ähnlichkeit verschiedener anzuwendender Sprachmuster mit der zu erkennenden
Sprachprobe entschieden wird, welches Wort oder welche
Wortfolge der Sprachprobe hinreichend genau entspricht.

Bei einer herkömmlichen Parameterextraktion werden aus dem
Sprachsignal Parametersätze wie Energiewerte von Bandpässen, Reflexionskoeffizienten oder Autokorrelationskoeffizienten berechnet. Diese werden in einer Vergleichsstufe
mit den entsprechenden Parametern von gespeicherten Sprachmustern verglichen. Aufgrund der gemessenen Ähnlichkeit
der verschiedenen Sprachmuster mit der zu erkennenden
Sprachprobe wird in einer Entscheidungsstufe entschieden,
welches Wort oder welche Wertfolge der Sprachprobe entspricht.

Nach den Untersuchungen von Mermelstein et al, vergleiche
Davis, Mermelstein: "Comparison of Parametric Representation for Monosyllabic Word Recognitoon in Continuous
Spoken Sentences", IEEE Trans. ASSP Vol.28, pp.357-366,
1980, sind die verschiedenen Parametersätze unterschied-

Pap 1 Bla / 26.9.1983

lich gut für die Spracherkennung geeignet. Besonders günstige Parametersätze sind jedoch mit einem sehr hohen technischen Aufwand verbunden.

Der vorliegenden Erfindung liegt die Aufgabe zugrunde, ein Verfahren der eingangs genannten Art zu schaffen, bei dem der technische Aufwand gegenüber dem Stand der Technik verringert ist.

Die Aufgabe der Erfindung wird durch ein Verfahren nach dem Oberbegriff des Patentanspruchs 1 gelöst, das durch die in dem kennzeichnenden Teil des Patentanspruchs 1 angegebenen Merkmale charakterisiert ist.

Vorteilhafte Weiterbildungen der vorliegenden Erfindung sind durch die in den Unteransprüchen angegebenen Merkmale gekennzeichnet.

Im folgenden wird die Erfindung anhand mehrerer Figuren im einzelnen beschrieben.

Fig.1 zeigt eine schematische Darstellung einer Struktur eines Spracherkennungssystems.

Fig.2 zeigt eine schematische Darstellung zu einer Methode der Vektorquantisierung mit einem sogenannten Mapping.

Fig.3 zeigt das Blockschaltbild einer Schaltungsanordnung zur Durchführung des erfindungsgemäßen Verfahrens.

Zur Sprachcodierung und neuerdings auch zur Spracherkennung hat sich die Methode der Vektorquantisierung als sehr erfolgreich erwiesen. Hierbei wird ein Sprachsignalabschnitt der Länge von 5 bis 50 msec einem bestimmten Parametersatz

$P_i$, der aus einer vorgegebenen Menge von L verschiedenen Parametersätzen $P_i$ (i = 1, ..., L) (das Codebuch der quantisierten Vektoren) gewählt ist, zugeordnet.

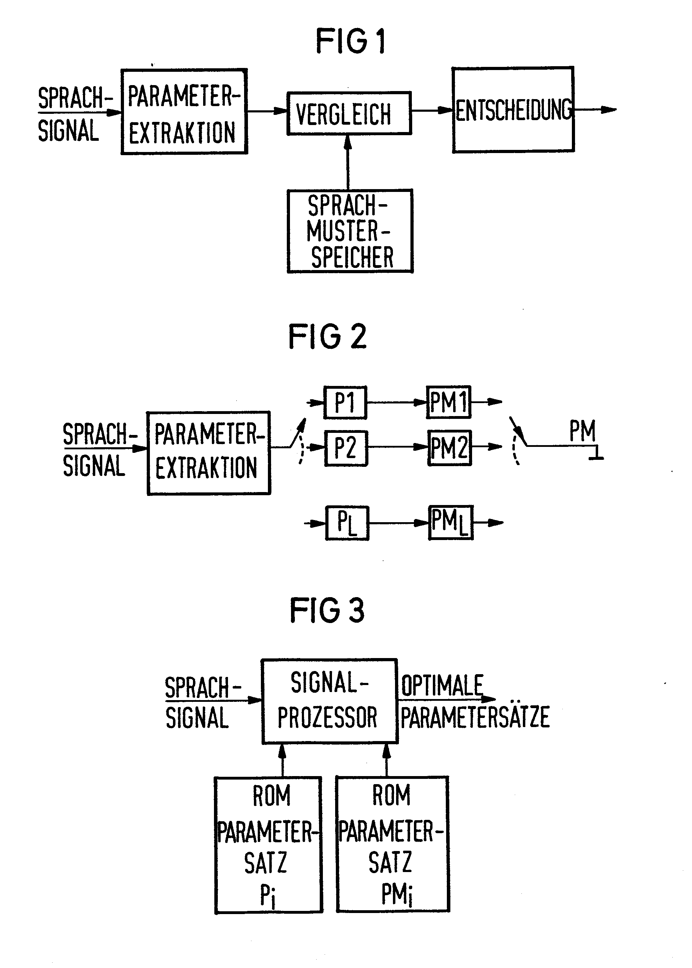

Die Anzahl L der verschiedenen Parametersätze bewegt sich in der Größenordnung 50 bis 5000. Die Parametersätze $P_i$ (i = 1, ..., L) sind so zu wählen, daß der Aufwand in der Parameterextraktionsstufe möglichst gering ist. Solche Parametersätze sind z.B. die Autokorrelationskoeffizienten der inversen LPC-Filterfunktion (vergl. beispielsweise A. Buzu et al: "Speech Coding based upon Vector Quantisation", IEEE Trans. ASSP, Vol.20, pp.562-574, 1980). Ein zweites Codebuch enthält Parametersätze $PM_i$ (i = 1,...,L), die sich besonders günstig für den Vergleich von Sprachmustern eignen. Solche Parametersätze sind z.B. Formanten oder Cepstralkoeffizienten. Durch eine einfache Abbildung (vergl. Fig.2) kann jedem Parametersatz $P_i$ der zugehörige Parametersatz $PM_i$ zugeordnet werden. Die Berechnung der Parametersätze erfolgt 'off line' einmal. Danach können die Parametersätze in einem Speichermedium, z.B. einem ROM, abgelegt werden.

Ein Real-time-Parameterextraktionssystem ist in Fig.3 gezeigt. Der Signalprozessor analysiert das Sprachsignal und ermittelt den Parametersatz $P_i$, welcher einem Sprachsignalabschnitt am ähnlichsten ist. Über eine einfache Adressenzuordnung kann der entsprechende optimale Parametersatz $PM_i$ aus einem ROM gelesen werden.

7 Patentansprüche
3 Figuren

Patentansprüche:

1. Verfahren zur Parameterextraktion in der automatischen Spracherkennung und in der Sprachcodierung, bei dem aus einem zu bewertenden Sprachsignal Parametersätze, wie Energiewerte von Bandpässen, Reflexionskoeffizienten und/oder Autokorrelationskoeffizienten berechnet werden, und wobei mit den gewonnenen Parametern eine Vektorquantisierung durchgeführt wird, für die das Sprachsignal in Sprachsignalabschnitte unterteilt wird, wobei die Sprachsignalabschnitte jeweils einem bestimmten Parametersatz erster Art, der aus mindestens einer vorgegebenen Menge von L verschiedenen Parametersätzen ausgewählt ist, zugeordnet werden, dadurch  g e k e n n z e i c h n e t , daß der so ausgewählte Parametersatz ($P_i$) einem Parametersatz ($PM_i$) einer zweiten Art mit Hilfe der dem Parametersatz ($P_i$) der ersten Art zugeordneten Nummer zugeordnet wird.

2. Verfahren nach Anspruch 1, dadurch  g e k e n n z e i c h n e t , daß die Menge (L) in einem Bereich zwischen L = 50 bis L = 50000 bestimmt ist.

3. Verfahren nach Anspruch 1, dadurch  g e k e n n z e i c h n e t , daß die Parametersätze der ersten Art vorzugsweise Autokorrelationskoeffizienten inverser LPC-Filterfunktionen sind.

4. Verfahren nach Anspruch 1, dadurch  g e k e n n z e i c h n e t , daß die Parametersätze der zweiten Art vorzugsweise Formanten oder Cepstralkoeffizienten sind.

5. Verfahren nach Anspruch 3 oder 4, dadurch  g e k e n n z e i c h n e t , daß die Parametersätze ($P_i$; $PM_i$)

derart ausgewählt sind, daß der für die Parameterextraktion erforderliche Software- und/oder Hardwareaufwand minimal ist.

6. Verfahren nach einem der vorhergehenden Ansprüche, dadurch g e k e n n z e i c h n e t , daß die Berechnung der Parametersätze vorab und im sogenannten 'off-line'-Betrieb durchgeführt wird, daß die gewonnenen Parametersätze nach ihrer Verwendbarkeit untersucht werden und daß die verwendbaren Parametersätze in einem Speichermedium, vorzugsweise einem ROM oder EPROM, abgelegt werden können.

7. Schaltungsanordnung zur Durchführung des Verfahrens nach Anspruch 6, dadurch g e k e n n z e i c h n e t , daß ein Signalprozessor (SP) mit einem Eingang für Sprachsignale, einem Ausgang für Parametersätze zweiter Art sowie jeweils einem Eingang für Parametersätze der ersten Art und Parametersätze der zweiten Art aus Code Books vorgesehen ist und daß jeweils ein Nur-Lesespeicher ROM für die Code Books der Parametersätze erster Art ($P_i$) und die Parametersätze der zweiten Art ($PM_i$) über die betreffenden Eingänge des Signalprozessors (SP) an diesen angeschlossen sind.

## FIG 1

SPRACH-SIGNAL → | PARAMETER-EXTRAKTION | → | VERGLEICH | → | ENTSCHEIDUNG | →

| SPRACH-MUSTER-SPEICHER | ↑ (to VERGLEICH)

## FIG 2

SPRACH-SIGNAL → | PARAMETER-EXTRAKTION |

→ | P1 | → | PM1 | →

→ | P2 | → | PM2 | →        PM

→ | P$_L$ | → | PM$_L$ | →

## FIG 3

SPRACH-SIGNAL → | SIGNAL-PROZESSOR | OPTIMALE PARAMETERSÄTZE →

| ROM PARAMETER-SATZ P$_i$ | ↑        | ROM PARAMETER-SATZ PM$_i$ | ↑